Europäisches Patentamt

European Patent Office

Office européen des brevets

(19)

(11) Veröffentlichungsnummer: **0 048 882**
**B1**

(12) **EUROPÄISCHE PATENTSCHRIFT**

(45) Veröffentlichungstag der Patentschrift:
27.12.85

(21) Anmeldenummer: 81107238.8

(22) Anmeldetag: 14.09.81

(51) Int. Cl.⁴: **G 01 D 15/18,** G 01 D 15/34,
B 41 J 3/04

(54) Elektrisches Gerät mit Schreibvorrichtung.

(30) Priorität: 29.09.80 DE 3036644

(43) Veröffentlichungstag der Anmeldung:
07.04.82 Patentblatt 82/14

(45) Bekanntmachung des Hinweises auf die Patenterteilung:
27.12.85 Patentblatt 85/52

(84) Benannte Vertragsstaaten:
CH FR LI SE

(56) Entgegenhaltungen:
DE - A - 2 925 769
FR - A - 1 285 817
GB - A - 912 842
US - A - 4 166 758

(73) Patentinhaber: **Siemens Aktiengesellschaft, Berlin und München Wittelsbacherplatz 2, D-8000 München 2 (DE)**

(72) Erfinder: **Franke, Rolf Dieter, Ing.grad, Gellertstrasse 38, D-7500 Karlsruhe (DE)**
Erfinder: **Häfner, Kurt, Ing.grad., Max-Dortu-Strasse 5, D-7500 Karlsruhe (DE)**

## Beschreibung

Die Erfindung betrifft ein elektrisches Gerät mit Schreibvorrichtung zum Aufzeichnen von Kurven und/oder alphanumerischen Zeichen, bei der ein linear bewegbarer Schreibkopf einer senkrecht dazu bewegbaren, zwischen zwei Walzen gespannten Papierbahn zugeordnet ist, wobei der Schreibkopf auf der dem Geräteinnern zugekehrten Seite der Papierbahn angeordnet ist.

Die Auswertung von Aufzeichnungen, wie sie mit elektrischen Geräten vorgenommen werden, erfolgt häufig schon während des Aufzeichnungsvorganges oder unmittelbar danach. In diesen Fällen ist es notwendig, die Aufzeichnung baldmöglichst ablesen zu können. Dem steht häufig die räumliche Anordnung der Aufzeichnungsvorrichtung entgegen. Dies ist beispielsweise bei Meßgeräten wie Punktdruckern oder Linienschreibern der Fall, bei denen ein linear bewegbarer Schreibkopf einer senkrecht dazu bewegbaren, zwischen zwei Walzen gespannten Papierbahn zugeordnet ist. Häufig hat die Verwendung eines Schreibkopfes auch zur Folge, daß das Schreibpapier verhältnismäßig tief im Gerät angeordnet ist. Dadurch wird der optische Zugang zu der aufgezeichneten Kurve oder den aufgezeichneten alphanumerischen Zeichen zusätzlich erschwert. Ähnliche Probleme ergeben sich bei Tintendruckern oder Fernschreibmaschinen, bei denen das Schreibpapier von unten nach oben transportiert und der Papierwagen mit dem Schreibkopf hin- und herläuft. Damit das zuletzt geschriebene Zeichen sichtbar ist, wird hier der Papierwagen im Pilgerschritt bewegt.

Ein Gerät gemäß dem Oberbegriff des einzigen Anspruchs ist der DE-AS 2 501 100 zu entnehmen. Bei einem in der Auslegeschrift Seriendrucker genannten elektrischen Gerät ist als Druckorgan ein Mosaikschreibkopf vorgesehen. Als Aufzeichnungsträger dient ein druckempfindliches Aufzeichnungsmaterial, das mit seiner sich bei einwirkendem Druck verfärbenden Seite auf einer Druckgegenlage aufliegt, die aus einer Klarsichtscheibe besteht. Der Mosaikschreibkopf ist auf der der Sichtseite abgewandten Seite des Aufzeichnungsträgers im Innern des Druckergehäuses angeordnet.

Dieser bekannte Drucker benötigt also einen besonders präparierten Aufzeichnungsträger, der erheblich teurer ist als normales Papier. Als Druckgegenlage ist ein Mehrschichtglas vorgesehen, bei dem wegen der Beanspruchung durch den Mosaikschreibkopf zumindest die innere Schicht aus Hartglas bestehen soll. Außerdem muß die Klarsichtscheibe leicht auswechselbar sein, weil selbst bei Verwendung von Hartglas ein gewisser Oberflächenverschleiß auftritt, der das Glas an den Stellen, die von dem Mosaikschreibkopf beaufschlagt werden, matt werden läßt. Neben dem Aufzeichnungsträger ist also auch noch die Glasscheibe als Verbrauchsmaterial anzusehen.

In der GB-A-912 842 ist ein Aufzeichnungsgerät beschrieben, bei dem ein hinter einer Sichtscheibe befindlicher Aufzeichnungsträger von der dem Beobachter abgewandten Seite aus, also vom Innern des Gerätes aus, durch eine Tintenfeder oder einen Druckkopf beschriftet wird. Für den Aufzeichnungsträger ist vorgeschrieben, daß er aus einem durchscheinenden Papier oder dergleichen bestehen soll. Es ist in der Patentschrift auch der Hinweis enthalten, daß die Markierungen durch das Papier hindurch gelesen werden. Zu diesem Zweck wird der Aufzeichnungsträger von innen her beleuchtet. Die Lesbarkeit der Schrift von der dem Druckkopf abgewandten Seite aus beruht also beim Gegenstand der britischen Patentschrift auf einer rein optischen Schattenwirkung der vom Innern des Gerätes aus beleuchteten Zeichen durch das durchscheinende Papier hindurch. Abgesehen davon, daß eine Beleuchtungseinrichtung einen zusätzlichen Aufwand in einem Registriergerät darstellt, wirft auch der Druckkopf einen Schatten auf das Papier, der mindestens diejenigen Zeichen, die gerade gedruckt sind, abschattet.

An sich sind zur Wiedergabe alphanumerischer Zeichen auch Schreibköpfe bekannt, mit denen die Zeichen mosaikartig aus einzelnen Farbpunkten zusammengesetzt werden. Bei diesen sogenannten Tintendruckern werden die einzelnen Punkte mittels piezoelektrisch anregbaren Tintenkanonen erzeugt, die je Erregungsimpuls ein Tintentröpfchen aus einer am Ende der Tintenkanone befindlichen Spritzdüse ausstoßen (DE-OS 2 543 420).

Die der Erfindung gestellte Aufgabe besteht in der Bereitstellung eines Aufzeichnungsgerätes, bei dem die Aufzeichnung sofort und unverdeckt durch einen Schreibkopf sichtbar wird, bei dem jedoch im Gegensatz zu Geräten des Standes der Technik ein unpräpariertes Papier und keine Beleuchtung im Geräteinnern notwendig ist.

Diese Aufgabe wird gemäß der Erfindung durch die kennzeichnenden Merkmale des Anspruchs 1 gelöst. Die einzelnen Tröpfchen des piezoelektrisch angeregten Tintendruckkopfes dringen leicht in das unkalandrierte Papier, das einen lockeren Faseraufbau aufweist, ein und erscheinen auf der Schauseite verhältnismäßig scharf, so daß auch auf der Rückseite der Papierbahn, d. h. auf der eigentlichen Vorderseite, eine vollwertige Aufzeichnung erzielt wird, die auch gut ablesbar ist. Die Papierbahn kann beispielsweise bei Registriergeräten unmittelbar an der Frontseite des Gerätes angeordnet werden.

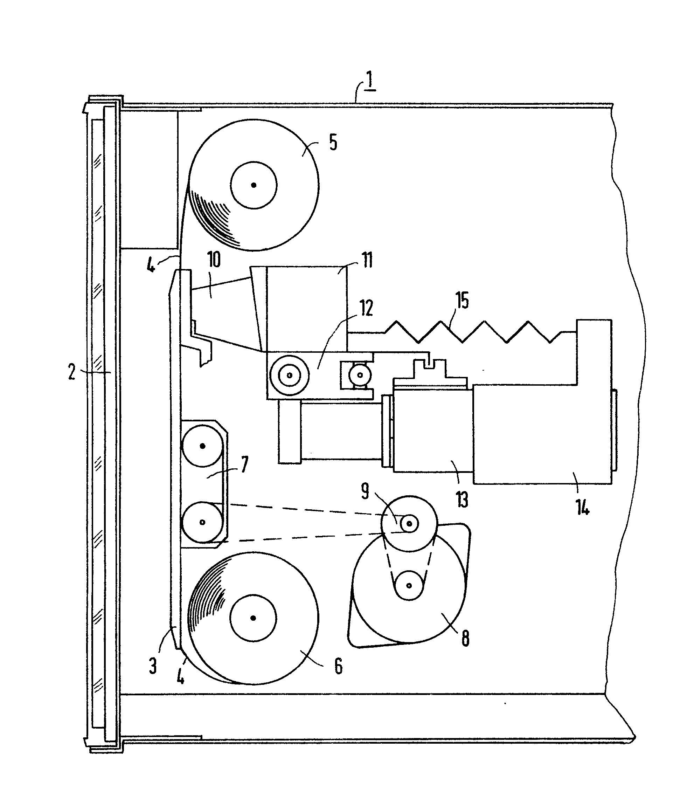

Ein Ausführungsbeispiel für die neue Anordnung ist in der Figur dargestellt.

Die Figur zeigt im Ausschnitt sowie in schematischer Darstellung den Einschub 1 eines elektrischen Registriergerätes, beispielsweise eines Punktdruckers, dessen Frontseite mit der Glasscheibe 2 abgedeckt ist. Hinter dieser Frontscheibe befindet sich eine Führung 3, in der die Papierbahn 4 von der walzenartigen Vorratsrolle 5 zur ebenfalls walzenartigen Aufwickelrolle 6 von oben nach unten transportiert wird. Die Papierbahn 4 wird dabei über eine entsprechende Antriebseinrichtung 7 vorwärtsbewegt, der der Antriebsmotor 8 und ein Zahnriemengetriebe 9 zugeordnet sind.

Auf der dem Inneren des Gerätes zugekehrten Seite der Papierbahn 4 ist der Schreibkopf 10 in Form eines Tintendruckers angeordnet. Er ist mit dem Tintenverteiler 11 verbunden, der auf dem Schreibwagen 12 aufsitzt. Der Schreibwagen 12 ist senkrecht zur Bewegungsrichtung der Papierbahn 4 bewegbar gelagert und wird von dem Motor 13 angetrieben. Hinter dem Motor 13 befindet sich der Tintentank 14, von dem aus die Schreibflüssigkeit über die flexible Zuleitung 15 dem Verteiler 11 zugeführt wird. Der Schreibkopf 10 ist zusammen mit den zugehörigen Versorgungs- und Antriebseinrichtungen zwischen den beiden Walzen der Vorratsrolle 5 und der Aufwickelrolle 6 angeordnet.

Die aus dem Schreibkopf 10 austretenden Tintentröpfchen treffen von hinten auf die Papierbahn 4 auf. Diese besteht aus einem holzfreien, nichtkalandrierten sowie nicht- oder nur schwachsatinierten Dünndruckpapier, dessen Gewicht also weniger als 50 g/m² beträgt. Diese Papiersorte gewährleistet, daß die aufgestrahlten Tintentropfen das Papier scharfkantig durchdringen und auf die Vorderseite durchschlagen.

Die beschriebene Art der Aufzeichnung von Kurven und/oder alphanumerischen Zeichen durch Anordnung des Schreibkopfes hinter dem Aufzeichnungspapier ist außer bei Registriergeräten auch bei Druckern und Fernschreibmaschinen möglich.

## Patentanspruch

Elektrisches Gerät mit einer Vorrichtung zum Aufzeichnen von Kurven und/oder alphanumerischen Zeichen, bei der ein linear bewegbarer Schreibkopf (10, 11, 14, 15) einer senkrecht dazu bewegbaren, zwischen zwei Walzen (5, 6) gespannten Papierbahn (4) zugeordnet ist, wobei der Schreibkopf (10, 11, 14, 15) auf der dem Geräteinnern zugekehrten Seite der Papierbahn (4) angeordnet ist, gekennzeichnet durch die Kombination der folgenden Merkmale:

a) als Schreibkopf (10, 11, 14, 15) ist ein piezoelektrisch angeregter Tintendrucker vorgesehen;
b) die Papierbahn (4) besteht aus holzfreiem, nichtkalandriertem sowie nicht- oder schwachsatiniertem Dünndruckpapier.

## Claim

Electrical apparatus comprising a device for recording curve and/or alphanumeric characters, wherein a linearly movable printing head (10, 11, 14, 15) is assigned to a paper web (4) which is movable at right angles thereto and stretched between two rollers (5, 6), the printing head (10, 11, 14, 15) being arranged on the side of the paper web (4) which faces the interior of the apparatus, characterised by the combination of the following features:

a) a piezo-electrically excited ink printer is provided as printing head (10, 11, 14, 15);
b) the paper web (4) consists of wood-free, noncalendered, unglazed or slightly glazed thin printing paper.

## Revendication

Appareil électrique comportant un dispositif d'enregistrement de courbes et/ou de caractères alphanumériques, dans lequel une tête d'enregistrement (10, 11, 14, 15) déplaçable linéairement est associée à une bande de papier (4) déplaçable perpendiculairement à la tête d'enregistrement et tendue entre deux rouleaux (5, 6), la tête d'enregistrement (10, 11, 14, 15) étant disposée sur la face de la bande de papier (4), qui est tournée vers l'intérieur de l'appareil, caractérisé par la combinaison des moyens remarquables suivants:

a) comme tête d'enregistrement (10, 11, 14, 15), il est prévu une imprimante à encre excitée par voie piézoélectrique;
b) la bande de papier (4) est constituée par du papier d'impression mince, sans bois, non calandré et non ou faiblement satiné.